# EUROPÄISCHE PATENTSCHRIFT

(11) **EP 2 625 476 B1**
(45) Veröffentlichungstag und Bekanntmachung des Hinweises auf die Patenterteilung: **03.07.2019**
(21) Anmeldenummer: 11764185.2
(22) Anmeldetag: 04.10.2011
(51) Int. Cl.: F25B 27/02

(54) **VERFAHREN ZUR WÄRMEINTEGRATION MITTELS EINER KÄLTEANLAGE**
PROCESS FOR HEAT INTEGRATION BY MEANS OF A REFRIGERATION SYSTEM
PROCÉDÉ D'INTÉGRATION DE CHALEUR AU MOYEN D'UNE INSTALLATION FRIGORIFIQUE

(30) Priorität: 07.10.2010 EP 10186818
(43) Veröffentlichungstag der Anmeldung: 14.08.2013
(73) Patentinhaber: BASF SE, 67056 Ludwigshafen am Rhein (DE)
(72) Erfinder: THEIS, Gerhard, 67133 Maxdorf (DE); BORREN, Thomas, Shanghai 200127 (CN); SCHLECHT, Jörg, 67229 Gerolsheim (DE); VANSANT, Frans, B-2920 Kalmthout (BE)
(74) Vertreter: BASF IP Association
(86) Internationale Anmeldenummer: PCT/EP2011/067246
(87) Internationale Veröffentlichungsnummer: WO 2012/045709

(56) Entgegenhaltungen:
- EP-A2- 1 391 665
- WO-A1-2005/100287
- JP-A- 2004 233 024
- US-A- 5 768 904
- US-B1- 6 523 357

## Beschreibung

Die Erfindung betrifft ein Verfahren zur Wärmeintegration bei verfahrenstechnischen Prozessen, bei dem in einem Wärmeträgerkreislauf ein Wärmeträgermedium in einem ersten Wärmetauscher Wärme von einem ersten Prozessstrom aufnimmt und an eine Kälteanlage abgibt und weiterhin ein zweiter Prozessstrom mit Hilfe der Kälteanlage abgekühlt wird.

Vor dem Hintergrund steigender Anforderungen hinsichtlich Energie- und Kosteneffizienz gewinnt die Wärmeintegration bei verfahrenstechnischen Prozessen immer mehr an Bedeutung. Unterschiedliche Varianten der Wärmeintegration sind in der Fachwelt bekannt und zum Teil in großtechnischen Anlagen etabliert. Üblicherweise werden dabei Temperaturunterschiede zwischen Prozessströmen ausgenutzt, beispielsweise wenn ein heißer Strom aus einem Reaktor verwendet wird, um den kühleren Zulauf zum Reaktor zu erwärmen. In Fällen, in denen der Temperaturunterschied zwischen den Strömen zu gering ist, um einen direkten Wärmeaustausch zu vollziehen, werden häufig Kälteanlagen oder Wärmepumpen eingesetzt, um die Wärme auf den entsprechenden Temperaturniveaus nutzbar zu machen. Neben Dampfstrahl-oder Kompressionskälteanlagen sind hier insbesondere Absorptionskälteanlagen oder Absorptionswärmepumpen zu nennen.

In einer Absorptionskältemaschine wird die Absorptionsfähigkeit eines ausgewählten Stoffpaares bestehend aus einem Kältemittel und einem Absorptionsmittel ausgenutzt (siehe z.B. "Dubbel Taschenbuch für den Maschinenbau, 21. Auflage, Verlag Springer, Berlin, 2005", Abschnitt M 1.4.3). Dabei verdampft das Kältemittel bei niedrigem Druck in einem Verdampfer und entzieht dadurch einem Prozessstrom auf niedrigem Temperaturniveau Wärme. Der entstehende Kältemitteldampf wird von dem Absorptionsmittel unter Wärmeabfuhr in einem Absorber absorbiert. Das mit Kältemittel angereicherte Absorptionsmittel wird in einen Austreiber auf einem höheren Druckniveau gepumpt, in dem unter Zufuhr von Wärme aus einem Prozessstrom auf höherem Temperaturniveau das Kältemittel wieder ausgetrieben wird. Das abgereicherte Absorptionsmittel wird wieder in den Absorber zurückgeführt. Der Kältemitteldampf wird auf dem höheren Druckniveau in einem Kondensator mit Kühlwasser verflüssigt und wieder dem Verdampfer zugeführt. Im industriellen Bereich hat sich insbesondere für Anwendungen bei tiefen Temperaturen das Stoffpaar Ammoniak als Kältemittel und Wasser als Absorptionsmittel bewährt. Daneben ist auch das Stoffpaar Wasser als Kältemittel und Lithiumbromid als Absorptionsmittel etabliert.

Die US-Patentschrift 4,530,826 beschreibt eine Möglichkeit, in einem verfahrenstechnischen Prozess Abwärme zu nutzen, die auf einem relativ niedrigen Temperaturniveau zur Verfügung steht. Dabei werden Produktströme aus Destillations-, Absorptions- oder Desorptionskolonnen sowie aus Reaktoren verwendet, um mittels einer Absorptionskälteanlage oder einer Absorptionswärmepumpe anderen Strömen an unterschiedlichen Orten des jeweiligen verfahrenstechnischen Prozesses Wärme zu entziehen oder zuzuführen. Illustriert wird das Prinzip beispielhaft an Prozessen zur Herstellung von Acrylnitril, Methacrylsäure, Acrylsäure, Blausäure und Formaldehyd.

In der PCT-Anmeldung WO 2008/034798 A1 wird ein Verfahren beschrieben zur Erzeugung einer Kälteenergie in einem Polykondensationsprozess, bei dem als Nebenprodukt entstehender Abwasserdampf durch Kondensation in ein Abwasser überführt wird. Die während der Kondensation des Abwasserdampfes freiwerdende Wärmeenergie wird durch ein Wärmeträgermedium aufgenommen und einem Kälteerzeuger mit einem thermischen Verdichter zugeführt und in Kälteenergie umgewandelt. Die Kälteenergie kann zur Abkühlung eines Prozessmediums oder auch in einer Klimaeinrichtung zur Konditionierung von Luft verwendet werden.

Der PCT Anmeldung WO 2005/100287 A1 offenbart ein Verfahren zur Wärmeintegration bei verfahrenstechnischen Prozessen.

Obwohl Kälteanlagen und Wärmepumpen bereits in etlichen verfahrenstechnischen Anlagen zur Wärmeintegration eingesetzt werden, besteht noch der Bedarf, die Technologie zu verbessern, vor allem im Hinblick auf eine noch breitere Verwendbarkeit.

Der im Folgenden beschriebenen Erfindung lag die Aufgabe zugrunde, bekannte Technologien zur Wärmeintegration derart weiterzuentwickeln, dass sie für einen breiteren Einsatzbereich geeignet sind.

Zur Lösung dieser Aufgabe wird ein Verfahren zur Wärmeintegration bei verfahrenstechnischen Prozessen vorgeschlagen, bei dem in einem Wärmeträgerkreislauf ein Wärmeträgermedium in einem ersten Wärmetauscher Wärme von einem ersten Prozessstrom aufnimmt und an eine Kälteanlage abgibt, weiterhin
- in einem Kühlmediumkreislauf ein Kühlmedium in der Kälteanlage abgekühlt wird und das Kühlmedium in einem zweiten Wärmetauscher Wärme von einem zweiten Prozessstrom aufnimmt oder
- ein zweiter Prozessstrom in der Kälteanlage abgekühlt wird,
dadurch gekennzeichnet, dass die Temperatur des Wärmeträgermediums zwischen Auslass aus dem ersten Wärmetauscher und Einlass in die Kälteanlage durch Wärmezufuhr erhöht wird.

Das erfindungsgemäße Verfahren dient dazu, Wärme zwischen zwei oder mehr Prozessströmen einer verfahrenstechnischen Anlage zu übertragen, sie also thermisch zu koppeln. Welcher Art die Prozessströme hinsichtlich ihrer Zusammensetzung sind, ist dabei unerheblich, da lediglich ihre jeweiligen Temperaturniveaus Einfluss auf das Verfahren haben. Erfindungsgemäß ist die Temperatur des ersten Prozessstroms am Ort der Wärmeübertragung an das Wärmeträgermedium höher als die Temperatur des zweiten Prozessstroms an seinem Ort der Wärmeübertragung an das Kühlmedium.

Dem ersten Prozessstrom wird in einem ersten Wärmetauscher Wärme entzogen und auf ein Wärmeträgermedium übertragen. Als Wärmeträgermedium stehen dem Fachmann verschiedene Substanzen zur Verfügung, aus denen er je nach Anforderung ein geeignetes Medium auswählen kann, beispielsweise Wasser, Mischungen aus Wasser und organischen Substanzen wie Ethylenglykol, Mineralöle oder synthetische Wärmeträgermedien. Das Wärmeträgermedium kann flüssig, dampfförmig oder mehrphasig sein, bevorzugt flüssig. In einer weiterhin bevorzugten Ausführungsform handelt es sich bei dem Wärmeträgermedium um Wasser in flüssiger Phase.

Für die Ausgestaltung des ersten Wärmetauschers kommen unterschiedliche Varianten in Betracht, z.B. Gleichstrom-, Gegenstrom- oder Kreuzstrom-Wärmetauscher. Sie können je nach Einsatzbereich sowie Menge und Temperaturniveau der zu übertragenden Wärme ausgewählt und dimensioniert werden. Als vorteilhaft hat sich ein Wärmetauscher mit einem Gegenstrom von Wärmeträgermedium und erstem Prozessstrom erwiesen, da hierbei vergleichsweise höhere Temperaturen des Wärmeträgermediums am Austritt aus dem Wärmetauscher erreicht werden können.

Das Wärmeträgermedium strömt in einem Kreislauf durch den ersten Wärmetauscher, wo es Wärme von dem ersten Prozessstrom aufnimmt, und eine Kälteanlage, an die das Wärmeträgermedium Wärme abgibt. Erfindungsgemäß wird die Temperatur des Wärmeträgermediums zwischen Auslass aus dem ersten Wärmetauscher und Einlass in die Kälteanlage durch eine Wärmezufuhr erhöht. Diese Wärmezufuhr kann auf unterschiedliche Art erfolgen.

In einer ersten bevorzugten Ausführungsform des erfindungsgemäßen Verfahrens erfolgt die Wärmezufuhr über einen Zusatzwärmetauscher. Als Zusatzwärmetauscher kommen sämtliche bekannten Bauarten in Betracht, die der Fachmann auf Basis der an das Wärmeträgermedium zu übertragenden Wärmemenge, dem Temperaturniveau und den zur Verfügung stehenden Hilfsenergien auswählen und dimensionieren kann.

In einer zweiten bevorzugten Ausführungsform des erfindungsgemäßen Verfahrens wird die Wärmezufuhr dadurch realisiert, dass ein flüssiges oder dampfförmiges Heizmedium in den Wärmeträgerkreislauf eingespeist wird. Bei dem Heizmedium handelt es sich vorzugsweise um eine Substanz, die auch im Wärmeträgermedium enthalten ist. Besonders bevorzugt wird heißes Wasser oder Wasserdampf als Heizmedium verwendet, wenn das Wärmeträgermedium im Wesentlichen aus Wasser besteht. Um die umlaufende Menge an Wärmeträgermedium zumindest annähernd konstant zu halten, kann eine Ausschleusung eines Stromes aus Wärmeträgermedium und Heizmedium vor dem Einlass in die Kälteanlage oder nach dem Auslass aus der Kälteanlage erfolgen. Bevorzugt erfolgt die Ausschleusung nach dem Auslass aus der Kälteanlage, da hierbei aufgrund des größeren Mengenstromes zusätzliche Energie für den Betrieb der Kälteanlage zur Verfügung steht.

Die Kälteanlage wird eingesetzt, um einem zweiten Prozessstrom Wärme zu entziehen. In einer erfindungsgemäßen Ausführungsform geschieht dies dadurch, dass der zweite Prozessstrom in der Kälteanlage abgekühlt wird. Dazu wird er mit der entsprechenden Wärme übertragenden Einheit der Kälteanlage in Kontakt gebracht. In einer weiteren erfindungsgemäßen Ausführungsform wird dem zweiten Prozessstrom Wärme mittels eines Kühlmediums entzogen. Bevorzugt wird das Kühlmedium in einem Kreislauf geführt, in dem es in einem zweiten Wärmetauscher Wärme von dem zweiten Prozessstrom aufnimmt, zur Kälteanlage strömt, dort Wärme an die Kälteanlage abgibt und wieder zum zweiten Wärmetauscher strömt.

Auch bei dem Kühlmedium kann der Fachmann aus verschiedenen Substanzen wählen, je nachdem, welche Anforderungen beispielsweise aufgrund der zu übertragenden Wärmemenge oder des Temperaturniveaus vorliegen. In einer bevorzugten Ausführungsform handelt es sich bei dem Kühlmedium um Wasser.

Auch für den zweiten Wärmetauscher kommen unterschiedliche Gestaltungsvarianten in Betracht, z.B. Gleichstrom-, Gegenstrom- oder Kreuzstrom-Wärmetauscher, die je nach Einsatzbereich und Anforderungen hinsichtlich der zu übertragenden Wärmemenge ausgewählt und dimensioniert werden können. Bevorzugt ist ein Wärmetauscher mit einem Gegenstrom von Kühlmedium und zweitem Prozessstrom, da hierbei die Kälteenergie besonders effizient ausgenutzt werden kann.

Die Kälteanlage im erfindungsgemäßen Verfahren kann unterschiedlich gestaltet sein. Geeignete Ausführungsformen sind dem Fachmann bekannt. Bevorzugt wird als Kälteanlage eine Absorptionskälteanlage eingesetzt, wie sie beispielsweise in "Dubbel Taschenbuch für den Maschinenbau, 21. Auflage, Verlag Springer, Berlin, 2005", Abschnitt M 1.4.3 beschrieben ist.

Die Begriffe "erster" und "zweiter" Prozessstrom bzw. Wärmetauscher werden hier und im Folgenden zur Unterscheidung zwischen Prozessströmen auf unterschiedlichen Temperaturniveaus verwendet. Sie sind nicht streng in der Einzahl aufzufassen. Von der Erfindung sind auch Anordnungen umfasst, bei denen das Wärmeträgermedium mit zwei oder mehr "ersten Prozessströmen" Wärme austauscht. Ebenso sind Anordnungen umfasst, bei denen zwei oder mehr "zweite Prozessströme" in der Kälteanlage oder mittels eines Kühlmediumkreislaufes gekühlt werden.

Der Ort der Wärmeübertragung von einem ersten Prozessstrom auf das Wärmeträgermedium und der Ort des Wärmeaustauschs des Kühlmediums mit einem zweiten Prozessstrom können nahe beieinander liegen, beispielsweise im Fall des Kopfabzugs aus einer Kolonne als erster Prozessstrom und eines Seitenabzugs oder Sumpfabzugs aus derselben Kolonne als zweiter Prozessstrom. Sie können aber auch weiter entfernt voneinander in einem verfahrenstechnischen Prozess sein, z.B. wenn die Ströme unterschiedlichen Apparaten zugeordnet sind. Der Entfernung der Orte voneinander ist lediglich aus praktischer und wirtschaftlicher Sicht eine Grenze gesetzt, da bei weit entfernten Orten lange Leitungen für Wärmeträgermedium oder Kühlmedium erforderlich sind, die mit entsprechenden Kosten, unter anderem für eine hinreichende Isolierung, verbunden sind.

In einer bevorzugten Ausführungsform wird die Temperatur des Wärmeträgermediums vor dem Eintritt in die Kälteanlage als Regelgröße auf einen vorgegebenen Wert geregelt, indem Stellgrößen des Zusatzwärmetauschers oder des zugeführten Heizmediums geeignet beeinflusst werden. In einer weiteren bevorzugten Ausführungsform wird anstelle der Temperatur vor dem Eintritt die Temperatur des Wärmeträgermediums nach dem Austritt aus der Kälteanlage als Regelgröße geregelt. Die Temperatur des Wärmeträgermediums am Eintritt in die Kälteanlage und die Temperatur am Austritt aus der Kälteanlage sind als Regelgrößen relevant für die Leistungsfähigkeit der Kälteanlage und für die Wärmemenge, die dem zweiten Prozessstrom entzogen werden kann. Für die Regelgröße kann ein Sollwert vorgegeben werden, wobei ein Regler durch Manipulation einer oder mehrere Stellgrößen dafür sorgt, dass sich die tatsächlich gemessene Temperatur ihrem Sollwert annähert. Ist bei dem erfindungsgemäßen Verfahren ein Zusatzwärmetauscher vorhanden, so ist die Leistung des Zusatzwärmetauschers beispielsweise eine geeignete Stellgröße zur Regelung der Temperatur vor oder nach der Kälteanlage. Wird hingegen ein Heizmedium zur Wärmezufuhr eingesetzt, kann die zugeführte Menge an Heizmedium vorteilhaft als Stellgröße verwendet werden.

Erfindungsgemäß handelt es sich bei dem ersten Prozessstrom um den Brüdenstrom aus einem thermischen Trennapparat. Beispiele thermischer Trennapparate mit geeigneten Brüdenströmen sind Destillationskolonnen oder Desorptionskolonnen. In einer weiteren bevorzugten Ausführungsform handelt es sich bei dem ersten Prozessstrom um den Produktstrom aus einem Reaktor, in dem z.B. aufgrund einer exothermen Reaktion der Produktstrom erwärmt wurde und vor einer weiteren Prozessstufe abgekühlt werden soll. Häufig ist der erste Prozessstrom gasförmig und wird zur weiteren Verarbeitung zumindest teilweise in eine oder mehrere flüssige Phasen überführt. Die dazu nötige Kondensation kann vorteilhaft in einem ersten Wärmetauscher im Sinne des erfindungsgemäßen Verfahrens durchgeführt werden. Es können auch noch weitere Wärmetauscher vorhanden sein, beispielsweise ein Luft- oder Kühlwasser-Kondensator.

Besonders vorteilhaft lässt sich das erfindungsgemäße Verfahren anwenden auf die Verschaltung einer Desorptionskolonne mit einer Absorptionskolonne, wobei es sich bei dem ersten Prozessstrom um einen Kopfstrom aus einer Desorptionskolonne handelt und bei dem zweiten Prozessstrom um einen Strom, der aus der Desorptionskolonne abgeführt und der Absorptionskolonne zugeführt wird. Eine solche Verschaltung wird im weiter unten folgenden Beispiel näher erläutert.

Durch die Erhöhung der Temperatur am Eingang der Kälteanlage wird die Leistung der Kälteanlage gesteigert und somit die Wärmemenge, die einem zweiten Prozessstrom entzogen werden kann, vergrößert. Dadurch lassen sich auch geringe Temperaturunterschiede zwischen erstem und zweitem Prozessstrom wirtschaftlich sinnvoll verwerten, die bislang ungenutzt blieben. Die zusätzlich benötigte Wärme, die über einen Zusatzwärmetauscher oder ein Heizmedium zugeführt wird, steht häufig in verfahrenstechnischen Anlagen ohnehin zur Verfügung, sodass der Nutzen aus dem erfindungsgemäßen Verfahren diese Mehraufwendung an Energie überwiegt.

Anhand der Zeichnungen wird im Folgenden die Erfindung weiter erläutert, wobei die Zeichnungen als Prinzipdarstellungen zu verstehen sind. Sie stellen keine Beschränkung der Erfindung, beispielsweise im Hinblick auf konkrete Ausgestaltungsvarianten, dar. Es zeigen:
- Fig. 1:: Prinzipskizze einer Anordnung zur Wärmeintegration gemäß Stand der Technik
- Fig. 2:: Prinzipskizze einer erfindungsgemäßen Anordnung zur Wärmeintegration mit Zusatzwärmetauscher
- Fig. 3:: Prinzipskizze einer erfindungsgemäßen Anordnung zur Wärmeintegration mit Zufuhr eines Heizmediums
- Fig. 4:: Ausschnitt aus dem Prozessschema eines Prozesses zur Herstellung von Ethylenoxid.

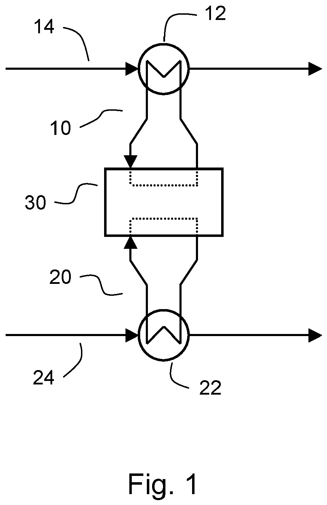

Fig. 1 zeigt eine Prinzipskizze einer Anordnung zur Wärmeintegration gemäß dem Stand der Technik. Ein erster Prozessstrom 14 gibt in einem ersten Wärmetauscher 12 auf einem höheren Temperaturniveau Wärme an ein Wärmeträgermedium ab. Das Wärmeträgermedium strömt durch eine Kälteanlage 30, wo es seinerseits Wärme an die Kälteanlage 30 abgibt. Der Wärmeträgerkreislauf 10 wird geschlossen, indem das abgekühlte Wärmeträgermedium wieder dem ersten Wärmetauscher 12 zugeführt wird. Auf einem niedrigeren Temperaturniveau nimmt ein Kühlmedium in einem zweiten Wärmetauscher 22 von einem zweiten Prozessstrom 24 Wärme auf. Das erwärmte Kühlmedium strömt in einem Kühlmediumkreislauf 20 durch die Kälteanlage 30, wo es abgekühlt wird und weiter zum zweiten Wärmetauscher strömt.

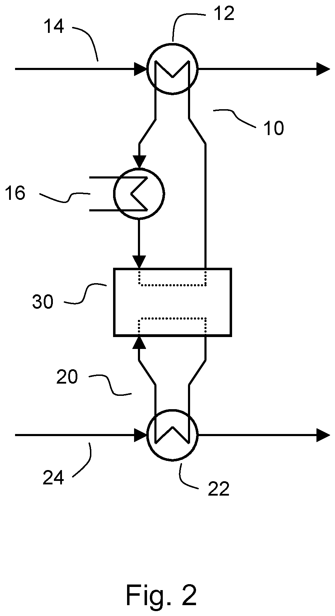

In Fig. 2 ist eine Prinzipskizze einer ersten Realisierung des erfindungsgemäßen Verfahrens dargestellt. Die bekannte Konfiguration nach Fig. 1 ist dahingehend erweitert, dass das Wärmeträgermedium nach dem Austritt aus dem ersten Wärmetauscher 12 durch einen Zusatzwärmetauscher 16 geführt wird, in dem ihm Wärme zugeführt wird, bevor es in die Kälteanlage 30 eintritt. Bevorzugt liegt die Temperatur des ersten Prozessstroms 14 beim Eintritt in den ersten Wärmetauscher 12 in einem Bereich von 85°C bis 130°C. In diesem ersten Wärmetauscher 12 wird das Wärmeträgermedium vorzugsweise um 1°C bis 20°C, besonders bevorzugt um 5°C bis 15°C erwärmt. Die Temperatur des Wärmeträgermediums am Austritt aus dem ersten Wärmetauscher 12 beträgt bevorzugt von 80°C bis 120°C. Die Temperatur des Kühlmediums beim Eintritt in den zweiten Wärmetauscher 22 liegt bevorzugt in einem Bereich von 5°C bis 25°C. Im zweiten Wärmetauscher 22 wird das Kühlmedium vorzugsweise um 2°C bis 15°C erwärmt.

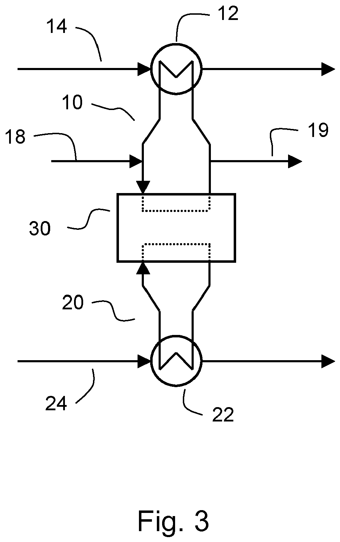

Fig. 3 zeigt eine Prinzipskizze einer zweiten Realisierung des erfindungsgemäßen Verfahrens. Die Temperaturerhöhung des Wärmeträgermediums auf seinem Weg vom Austritt aus dem ersten Wärmetauscher 12 zum Eintritt in die Kälteanlage 30 wird durch Einspeisung eines Heizmediums 18 in das Wärmeträgermedium bewirkt. Bevorzugt erfolgt die Einspeisung des Heizmediums 18 in den Wärmeträgerkreislauf 10 über eine Mischdüse mittels einer Temperaturregelung. Um eine Akkumulation von Wärmeträgermedium und Heizmedium im Wärmeträgerkreislauf 10 zu verhindern, erfolgt bevorzugt nach Austritt aus der Kälteanlage 30 eine Ausschleusung, in Fig. 3 als Strom 19 bezeichnet. In einer vorteilhaften Ausgestaltung geschieht die Ausschleusung durch eine Standregelung in einem Ausgleichsgefäß.

Die Temperaturerhöhung des Wärmeträgermediums über den Zusatzwärmetauscher 16 beziehungsweise durch Einspeisung des Heizmediums beträgt bevorzugt von 0,5°C bis 10°C, besonders bevorzugt von 1°C bis 5°C.

### Beispiel

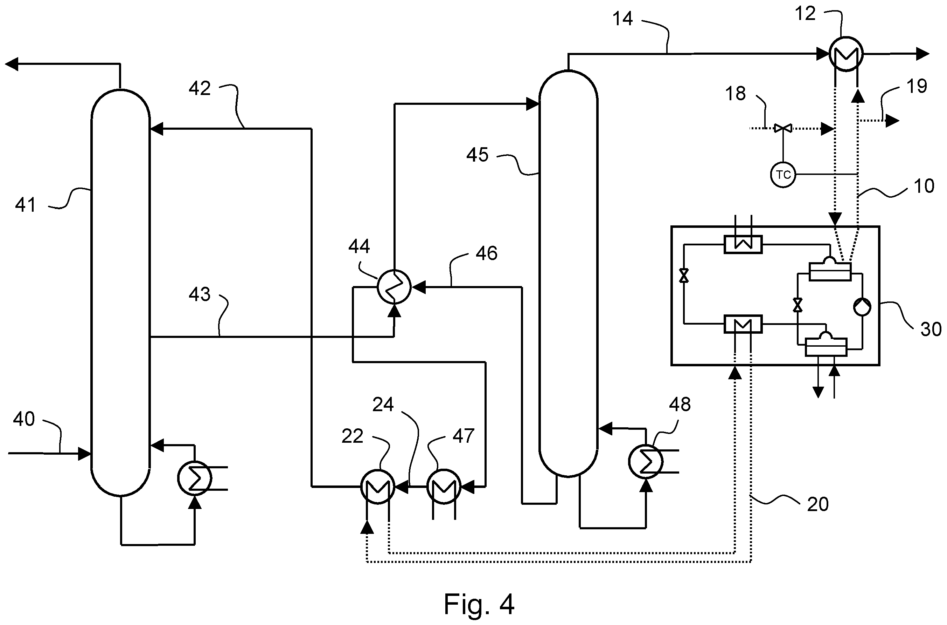

Ethylenoxid (EO) wird großtechnisch durch Direktoxidation von Ethylen mit Luft oder Sauerstoff an Silberkatalysatoren hergestellt. Dabei werden Ethylen und Sauerstoff in einem Kreisgasstrom vorgelegt, der neben den Reaktanden Inertgase und das Nebenprodukt der Ethylentotaloxidation, Kohlendioxid, enthält. Derartige Verfahren sind beispielsweise in Ullmann's Encyclopedia of Industrial Chemistry, Seventh Edition beschrieben. Fig. 4 zeigt vereinfacht einen Ausschnitt aus dem Prozessschema, bei dem das erfindungsgemäße Verfahren eingesetzt wird. Die nachfolgend angegebenen Drücke beziehen sich auf den Absolutdruck.

Das aus dem Reaktor austretende, gekühlte gasförmige Reaktionsprodukt 40 wird einer Absorptionskolonne 41 zugeführt. Dort wird das Reaktionsprodukt bei einem Druck von 12 bis 18 bar im Gegenstrom zu einer Waschflüssigkeit 42 geführt, wobei das Wertprodukt EO sowie weitere Leichtsieder durch Absorption in die Waschflüssigkeit übergehen. Die beladene Waschflüssigkeit wird über einen Seitenabzug 43 aus der Absorptionskolonne 41 entfernt, in einem Wärmetauscher 44 vorgewärmt und einer Desorptionskolonne 45 zugeführt. Dort wird sie bei einer Temperatur von 100 bis 150°C und einem Druck von 1 bis 4 bar mit Wasserdampf regeneriert. Der mit EO angereicherte Brüdenstrom 14 wird über Kopf der Desorptionskolonne 45 abgezogen und nach der Abtrennung von eingelösten Leichtsiedern einer Reindestillation oder einer Anlage zur Gewinnung von Ethylenglykol zugeführt. Im Sumpfabzug 46 der Desorptionskolonne 45 wird die unbeladene Waschflüssigkeit abgezogen, in mehreren Wärmetauschern 44, 47 und 22 auf eine Temperatur im Bereich von 15 bis 30°C, bevorzugt im Bereich von 18 bis 22°C gekühlt und wieder zur Absorptionskolonne 41 zurückgeführt.

Die Kühlung der Waschflüssigkeit erfolgt in diesem Beispiel mehrstufig. Ein Anteil der zur Kühlung der Waschflüssigkeit erforderlichen Kühlleistung wird durch Wärmeaustausch mit der beladenen Waschflüssigkeit im Zulauf zur Desorptionskolonne im Wärmetauscher 44 aufgebracht. Anschließend wird die Waschflüssigkeit durch einen mit Kühlwasser betriebenen Wärmetauscher 47 geführt. Bei maximaler Kühlleistung entspricht die Temperatur am Austritt aus diesem Wärmetauscher 47 im Wesentlichen der Temperatur des Kühlwassers. Beispiele für Kühlwasser sind Flusswasser, Meerwasser, Brackwasser, aber auch Wasser aus Rückkühlwerken oder Kühltürmen. Hinsichtlich der zur Verfügung stehenden Kühlwassertemperatur bestehen sowohl regionale als auch jahreszeitliche Unterschiede. In Mitteleuropa beispielsweise kann die Temperatur von Flusswasser von ca. 5°C im Winter bis zu ca. 25°C im Sommer schwanken.

Nach dem Austritt aus dem mit Kühlwasser betriebenen Wärmetauscher 47 wird die Waschflüssigkeit in einem mit Kaltwasser betriebenen Wärmetauscher 22 bei Bedarf weiter abgekühlt. Soll beispielsweise die Waschflüssigkeit bei 15°C der Absorptionskolonne zugeführt werden, und beträgt die Temperatur des Kühlwassers 20°C, so übernimmt der Kaltwasser-Wärmetauscher 22 die Abkühlung der Waschflüssigkeit von ca. 20°C am Austritt aus dem Kühlwasser-Wärmetauscher 47 auf die erforderlichen 15°C. Um dies zu erreichen, muss das Kaltwasser bei weniger als 15°C zur Verfügung gestellt werden. Herkömmlich kommen zur Erzeugung des notwendigen Kaltwassers Dampfstrahlkälteanlagen oder Kompressionskälteanlagen zum Einsatz. Dabei müssen große Mengen an Heizdampf oder elektrischer Energie zur Erzeugung der Kälteleistung aufgebracht werden. Dieser Energieaufwand kann durch Verwendung des erfindungsgemäßen Verfahrens deutlich reduziert werden.

Steht Kühlwasser bei einer niedrigeren Temperatur zur Verfügung, beispielsweise bei 5 bis 10°C in den Wintermonaten, kann auf den Betrieb des Kaltwasser-Wärmetauschers 22 verzichtet werden. Es kann allerdings auch in solchen Situationen vorteilhaft sein, den Kaltwasser-Wärmetauscher 22 zu betreiben, beispielsweise wenn für den Kühlwasser-Wärmetauscher 47 eine maximal zulässige Temperaturdifferenz auf der Kühlwasserseite vorgeschrieben ist und diese überschritten würde, wenn die Waschflüssigkeit vollständig in diesem Wärmetauscher 47 auf die gewünschte Rücklauftemperatur gekühlt würde.

Das Kaltwasser für den Wärmetauscher 22 wird in einem Kühlmediumkreislauf 20 durch eine Kälteanlage 30 bei einer Temperatur von 10 bis 25°C bereitgestellt, die in diesem Beispiel als Absorptionskälteanlage ausgeführt ist. Die zum Betrieb der Kälteanlage 30 erforderliche Energie wird einem Wärmetauscher 12 entnommen, der vorgesehen ist, um den Brüdenstrom 14 mit einer Temperatur von 105 bis 125°C aus der Desorptionskolonne 45 teilweise zu kondensieren. In einem Wärmeträgerkreislauf 10 strömt Wasser mit einer Temperatur von 80 bis 100°C von der Kälteanlage 30 zum Wärmetauscher 12 und nimmt dort Wärme aus dem Brüdenstrom 14 auf. Das erwärmte Wasser mit einer Temperatur von 85 bis 120°C fließt zur Kälteanlage 30 zurück und gibt seinerseits Wärme an den Austreiber der Kälteanlage 30 ab.

Zur Steigerung der Kälteleistung der Kälteanlage 30 wird dem Wasser als Wärmeträgermedium zwischen dem Austritt aus dem Wärmetauscher 12 und dem Eintritt in die Kälteanlage 30 Wasserdampf als Heizmedium 18 zugeführt. Dabei wird die Temperatur des Wärmeträgermediums am Austritt aus der Kälteanlage 30 gemessen und durch Variation der Menge an zugeführtem Heizmedium 18 auf einen vorgegebenen Sollwert geregelt. Nach Austritt aus der Kälteanlage 30 wird ein Teil des Wärmeträgermediums über Strom 19 ausgeschleust und dem Kondensatsystem zugeführt, um eine Akkumulation des Wärmeträgermediums im Wärmeträgerkreislauf 10 zu vermeiden.

Durch eine Erhöhung der Temperatur des Wärmeträgermediums in die Kälteanlage 30 von 92°C auf 97°C beispielsweise kann die Kälteleistung der Absorptionskälteanlage bei identischer Temperatur des Kühlmediums beim Eintritt in die Kälteanlage und bei gleichem Temperaturniveau im Solekreis in der Kälteanlage um ca. 15% gesteigert werden.

Neben der Steigerung der Kälteleistung lässt sich durch die Wärmezufuhr weiterhin erreichen, dass die in die Kälteanlage eingetragene Wärmemenge weitgehend unabhängig von eventuell auftretenden Schwankungen im Brüdenstrom 14 hinsichtlich Durchflussmenge oder Temperatur ist. Dies bewirkt eine gleichmäßigere Bereitstellung der Kälteenergie für den Wärmetauscher 12 und macht den Anlagenteil unempfindlicher gegen Schwankungen oder Störungen.

Um eine hinsichtlich des Energieverbrauchs optimierte Fahrweise des in Fig. 4 dargestellten Prozesses zu erreichen, kann die nachfolgend beschriebene Regelungsstrategie implementiert werden, vorzugsweise in Form einer modellgestützten Regelung. An mindestens drei Stellen in der Desorptionskolonne 45 werden Messwerte für die Temperatur aufgenommen und daraus der Temperaturverlauf in der Kolonne bestimmt. Der Dampfeintrag in den Verdampfer 48 der Desorptionskolonne 45 wird so angepasst, dass die Beladung der Waschflüssigkeit an Ethylenoxid im Sumpfabzug 46 von 0,5 bis 10 Gew.-ppm, vorzugsweise von 2 bis 5 Gew.-ppm beträgt. Weiterhin wird die zur Absorptionskolonne 41 zurückgeführte Waschflüssigkeitsmenge 42 soweit reduziert, dass die Konzentration an Ethylenoxid in dem die Absorptionskolonne 41 verlassenden Kopfstrom von 10 bis 500 Gew.-ppm, vorzugsweise von 20 bis 50 Gew.-ppm beträgt. Durch eine Steigerung des Dampfeintrags 18 vor Eintritt in die Kälteanlage 30 lässt sich die Menge an zurückgeführter Waschflüssigkeit 42 verringern, was zur Folge hat, dass im Verdampfer 48 der Desorptionskolonne 45 weniger Dampf benötigt wird. Die Summe aus Dampfeintrag 18 in die Kälteanlage und Dampfeintrag in den Verdampfer 48 wird durch die Regelungsstrategie minimiert. Dazu kann direkt der Dampfeintrag 18 in die Kälteanlage entsprechend beeinflusst werden. Es kann auch eine indirekte Beeinflussung vorgesehen sein, bei der durch die Regelungsstrategie die Temperatur vor Eintritt in die oder nach Austritt aus der Kälteanlage 30 beeinflusst wird. In diesem Fall wird der Dampfeintrag 18 in einem unterlagerten Regelkreis beeinflusst.

Das erfindungsgemäße Verfahren kann auch noch an anderer Stelle im EO-Prozess eingesetzt werden (in Fig. 4 nicht dargestellt). Nach einer Verdichtung auf einen Druck von 18 bis 24 bar wird ein Teilstrom von 30 bis 99% des aus der Absorptionskolonne 41 abgezogenen Kreisgases einer CO2-Absorption zugeführt. In der Regel kommt dabei eine Lösung aus Kaliumcarbonat als Absorptionsmittel zum Einsatz. Der von CO2 weitgehend befreite Kreisgasteilstrom wird nach dem Austritt aus dem Absorber gekühlt und zum EO-Reaktor zurückgeführt. Die mit CO2 beladene Kaliumcarbonatlösung wird in einem Desorber bei einer Temperatur von 100 bis 120°C thermisch regeneriert. Das CO2 wird dabei mit Wasserdampf gesättigt bei 1 bis 2 bar aus der Kaliumcarbonatlösung ausgetrieben. Hier wird wiederum der Brüdenstrom aus dem Desorber mit einer Temperatur von 100 bis 115°C durch einen ersten Wärmetauscher im Sinne der vorliegenden Erfindung geleitet, um eine Kälteanlage anzutreiben. Die gewonnene Kälteenergie kann ebenfalls zur Kühlung der Waschflüssigkeit zur Absorptionskolonne 41 verwendet oder alternativ an anderen Stellen im EO-Verfahren eingesetzt werden.

Durch den Einsatz des erfindungsgemäßen Verfahrens beim EO-Herstellungsprozess lässt sich dessen Wirtschaftlichkeit verbessern. Vorteile bietet insbesondere die Verwendung der Desorber-Brüdenströme zur Erzeugung von Wärmeenergie für eine Absorptionskälteanlage zur Gewinnung von Kaltwasser und dessen Nutzung zur Kühlung der Waschflüssigkeit für den Absorber. Durch eine Verringerung der Zulauftemperatur der Waschflüssigkeit zum Absorber bei gleichbleibender Zulaufmenge lässt sich die Absorption der Wertkomponente aus dem Kreisgasstrom verbessern. Damit lässt sich mit dem erfindungsgemäßen Verfahren eine Kapazitätssteigerung der EO-Absorption und -Desorption in einer bestehenden Anlage bei konstantem Bedarf an extern zugeführtem Heizdampf erreichen.

Alternativ kann aufgrund der verbesserten Absorption bei gleichbleibender Kapazität eine geringere Menge an umlaufender Waschflüssigkeit vorgesehen werden. Insbesondere bei der Planung von Neuanlagen führt dies zu geringeren Investitionskosten durch kleinere Apparate und zu einer Verringerung der Betriebskosten durch einen kleineren Heizdampfbedarf für die Regeneration der Waschflüssigkeit im EO-Desorber.

Auch in anderen Prozessen lässt sich das erfindungsgemäße Verfahren vorteilhaft anwenden. Bevorzugt wird dabei der zweite Prozessstrom, der aus einer Desorptionskolonne abgeführt und einer Absorptionskolonne zugeführt wird, auf eine Temperatur im Bereich von größer 10°C und kleiner der zur Verfügung stehenden Kühlwassertemperatur abgekühlt. Weiterhin bevorzugt ist ein Verfahren, bei dem diese Abkühlung mehrstufig erfolgt, indem der zweite Prozessstrom, der aus der Desorptionskolonne abgeführt wird, in einem Wärmetauscher mit Kühlwasser im Wesentlichen auf die Kühlwassertemperatur abgekühlt wird, und anschließend in mindestens einem Wärmetauscher, der mit Kaltwasser aus einer Absorptionskälteanlage betrieben wird, auf eine Temperatur im Bereich von größer 10°C und kleiner der Kühlwassertemperatur gebracht wird.

## Patentansprüche

1. Verfahren zur Wärmeintegration bei verfahrenstechnischen Prozessen, bei dem in einem Wärmeträgerkreislauf (10) ein Wärmeträgermedium in einem ersten Wärmetauscher (12) Wärme von einem ersten Prozessstrom (14) aufnimmt und an eine Kälteanlage (30) abgibt, weiterhin
- in einem Kühlmediumkreislauf (20) ein Kühlmedium in der Kälteanlage (30) abgekühlt wird und das Kühlmedium in einem zweiten Wärmetauscher (22) Wärme von einem zweiten Prozessstrom (24) aufnimmt oder
- ein zweiter Prozessstrom (24) in der Kälteanlage (30) abgekühlt wird,
**dadurch gekennzeichnet, dass** es sich bei dem ersten Prozessstrom (14) um einen Brüdenstrom aus einem thermischen Trennapparat handelt, und dass die Temperatur des Wärmeträgermediums zwischen Auslass aus dem ersten Wärmetauscher (12) und Einlass in die Kälteanlage (30) durch Wärmezufuhr erhöht wird.

2. Verfahren nach Anspruch 1, wobei die Wärmezufuhr über einen Zusatzwärmetauscher (16) erfolgt.

3. Verfahren nach Anspruch 1, wobei die Wärmezufuhr dadurch erfolgt, dass ein flüssiges oder dampfförmiges Heizmedium (18) in den Wärmeträgerkreislauf (10) eingespeist wird.

4. Verfahren nach Anspruch 2 oder 3, wobei die Temperatur des Wärmeträgermediums vor dem Eintritt in die Kälteanlage (30) auf einen vorgegebenen Wert geregelt wird, indem die Leistung des Zusatzwärmetauschers (16) oder die zugeführte Menge an Heizmedium (18) beeinflusst wird.

5. Verfahren nach Anspruch 2 oder 3, wobei die Temperatur des Wärmeträgermediums nach dem Austritt aus der Kälteanlage (30) auf einen vorgegebenen Wert geregelt wird, indem die Leistung des Zusatzwärmetauschers (16) oder die zugeführte Menge an Heizmedium (18) beeinflusst wird.

6. Verfahren nach einem der Ansprüche 1 bis 5, wobei es sich bei der Kälteanlage (30) um eine Absorptionskälteanlage handelt.

7. Verfahren nach einem der Ansprüche 1 bis 6, wobei die Temperatur des aus dem ersten Wärmetauscher (12) austretenden Wärmeträgermediums von 80°C bis 120°C und die nachfolgende Temperaturerhöhung des Wärmeträgermediums von 0,5°C bis 10°C beträgt.

8. Verfahren nach einem der Ansprüche 1 bis 7, wobei es sich bei dem ersten Prozessstrom (14) um einen Kopfstrom aus einer Desorptionskolonne handelt und bei dem zweiten Prozessstrom (24) um einen Strom, der aus der Desorptionskolonne abgeführt und einer Absorptionskolonne zugeführt wird.

9. Verfahren nach Anspruch 8, wobei der zweite Prozessstrom (24), der aus der Desorptionskolonne abgeführt und einer Absorptionskolonne zugeführt wird, auf eine Temperatur im Bereich von größer 10°C und kleiner der zur Verfügung stehenden Kühlwassertemperatur abgekühlt wird.

10. Verfahren nach Anspruch 9, wobei die Abkühlung mehrstufig erfolgt, indem der zweite Prozessstrom (24), der aus der Desorptionskolonne abgeführt wird, in einem Wärmetauscher mit Kühlwasser im Wesentlichen auf die Kühlwassertemperatur abgekühlt wird, und anschließend in mindestens einem Wärmetauscher (22), der mit Kaltwasser aus einer Absorptionskälteanlage betrieben wird, auf eine Temperatur im Bereich von größer 10°C und kleiner der Kühlwassertemperatur gebracht wird.

11. Verfahren nach mindestens einem der Ansprüche 1 bis 10, wobei es sich bei dem verfahrenstechnischen Prozess um einen Prozess zur Herstellung von Ethylenoxid und/oder Ethylenglykol handelt.

12. Verfahren nach Anspruch 10, wobei es sich bei dem verfahrenstechnischen Prozess um einen Prozess zur Herstellung von Ethylenoxid handelt, in der Desorptionskolonne eine mit Ethylenoxid beladene Waschflüssigkeit regeneriert wird, wobei der mit Ethylenoxid angereicherte erste Prozessstrom (14) am Kopf der Kolonne abgezogen wird, die regenerierte Waschflüssigkeit als zweiter Prozessstrom (24) mehrstufig abgekühlt und zur Absorptionskolonne zurückgeführt wird, wobei die Abkühlung auf eine Temperatur im Bereich von 15°C bis 30°C, bevorzugt im Bereich von 18°C bis 22°C erfolgt.

13. Verfahren nach Anspruch 12, wobei ein dampfförmiges Heizmedium (18) in den Wärmeträgerkreislauf (10) eingespeist wird, und eine modellgestützte Regelung durch Beeinflussung der Menge des dampfförmigen Heizmediums (18) die Summe aus zugeführtem Heizmedium (18) und Dampfzufuhr zum Verdampfer der Desorptionskolonne minimiert.

## Claims

1. A process for heat integration in engineering processes in which, in a heat carrier circuit (10), a heat carrier medium takes up heat from a first process stream (14) in a first heat exchanger (12) and releases it to a refrigeration system (30), in addition
- in a refrigerant circuit (20) a refrigerant is cooled in the refrigeration system (30) and the refrigerant takes up heat from a second process stream (24) in a second heat exchanger (22) or
- a second process stream (24) is cooled in the refrigeration system (30),
wherein the first process stream (14) is a vapor stream from a thermal separation apparatus, and the temperature of the heat carrier medium is increased by heat supply between egress from the first heat exchanger (12) and ingress into the refrigeration system (30) .

2. The process according to claim 1, wherein the heat is supplied via an additional heat exchanger (16) .

3. The process according to claim 1, wherein the heat is supplied by a liquid or vaporous heating medium (18) being fed into the heat carrier circuit (10).

4. The process according to claim 2 or 3, wherein the temperature of the heat carrier medium, before entry into the refrigeration system (30) is controlled to a preset value by influencing the output of the additional heat exchanger (16) or the supplied amount of heating medium (18).

5. The process according to claim 2 or 3, wherein the temperature of the heat carrier medium, after exit from the refrigeration system (30), is controlled to a preset value by influencing the output of the additional heat exchanger (16) or the supplied amount of heating medium (18).

6. The process according to any one of claims 1 to 5, wherein the refrigeration system (30) is an absorption refrigeration system.

7. The process according to any one of claims 1 to 6, wherein the temperature of the heat carrier medium exiting from the first heat exchanger (12) is from 80°C to 120°C, and the subsequent temperature increase of the heat carrier medium is from 0.5°C to 10°C.

8. The process according to any one of claims 1 to 7, wherein the first process stream (14) is an overhead stream from a desorption column, and the second process stream (24) is a stream which is removed from the desorption column and supplied to an absorption column.

9. The process according to claim 8, wherein the second process stream (24) which is removed from the desorption column and supplied to an absorption column is cooled to a temperature in the range from above 10°C and below the available cooling water temperature.

10. The process according to claim 9, wherein the cooling proceeds in a multistage manner by the second process stream (24) which is removed from the desorption column being cooled in a heat exchanger using cooling water substantially to the cooling water temperature, and then, in at least one heat exchanger (22) which is operated using cold water from an absorption refrigeration system, being brought to a temperature in the range from above 10°C and below the cooling water temperature.

11. The process according to at least one of claims 1 to 10, wherein the engineering process is a process for producing ethylene oxide and/or ethylene glycol.

12. The process according to claim 10, wherein the engineering process is a process for producing ethylene oxide, in the desorption column a scrubbing liquid loaded with ethylene oxide is regenerated, wherein the ethylene oxide-enriched first process stream (14) is taken off at the top of the column, the regenerated scrubbing liquid is cooled in a multistage manner as a second process stream (24) and recirculated to the absorption column, wherein the cooling proceeds to a temperature in the range from 15°C to 30°C, preferably in the range from 18°C to 22°C.

13. The process according to claim 12, wherein a vaporous heating medium (18) is fed into the heat exchanger circuit (10), and a model-supported control, by influencing the amount of the vaporous heating medium (18), minimizes the sum of supplied heating medium (18) and steam feed to the evaporator of the desorption column.

## Revendications

1. Procédé d'intégration de chaleur dans des processus technologiques, dans lequel un milieu caloporteur dans un circuit de milieu caloporteur (10) absorbe de la chaleur d'un premier courant de processus (14) dans un premier échangeur de chaleur (12) et la cède à une installation frigorifique (30), en outre
- dans un circuit de milieu réfrigérant (20) un milieu réfrigérant est refroidi dans l'installation frigorifique (30) et le milieu réfrigérant absorbe de la chaleur d'un deuxième courant de processus (24) dans un deuxième échangeur de chaleur (22) ou
- un deuxième courant de processus (24) est refroidi dans l'installation frigorifique (30),
**caractérisé en ce que** le premier courant de processus (14) est un courant de vapeurs provenant d'un appareil de séparation thermique, et **en ce que** la température du milieu caloporteur est augmentée entre la sortie du premier échangeur de chaleur (12) et l'entrée dans l'installation frigorifique (30) par apport de chaleur.

2. Procédé selon la revendication 1, dans lequel l'apport de chaleur est effectué au moyen d'un échangeur de chaleur supplémentaire (16).

3. Procédé selon la revendication 1, dans lequel l'apport de chaleur est effectué en injectant un milieu chauffant liquide ou sous forme de vapeur (18) dans le circuit de milieu caloporteur (10).

4. Procédé selon la revendication 2 ou 3, dans lequel la température du milieu caloporteur est régulée avant l'entrée dans l'installation frigorifique (30) à une valeur prédéterminée, en influençant la puissance de l'échangeur de chaleur supplémentaire (16) ou la quantité de milieu chauffant (18) ajoutée.

5. Procédé selon la revendication 2 ou 3, dans lequel la température du milieu caloporteur est régulée après la sortie de l'installation frigorifique (30) à une valeur prédéterminée, en influençant la puissance de l'échangeur de chaleur supplémentaire (16) ou la quantité de milieu chauffant (18) ajoutée.

6. Procédé selon l'une quelconque des revendications 1 à 5, dans lequel l'installation frigorifique (30) est une installation frigorifique à absorption.

7. Procédé selon l'une quelconque des revendications 1 à 6, dans lequel la température du milieu caloporteur sortant du premier échangeur de chaleur (12) vaut de 80°C à 120°C et l'augmentation ultérieure de la température du milieu caloporteur vaut de 0,5°C à 10°C.

8. Procédé selon l'une quelconque des revendications 1 à 7, dans lequel le premier courant de processus (14) est un courant de tête d'une colonne de désorption et le deuxième courant de processus (24) est un courant, qui est évacué de la colonne de désorption et envoyé à une colonne d'absorption.

9. Procédé selon la revendication 8, dans lequel le deuxième courant de processus (24), qui est évacué de la colonne de désorption et envoyé à une colonne d'absorption, est refroidi à une température située dans la plage supérieure à 10°C et inférieure à la température de l'eau de refroidissement disponible.

10. Procédé selon la revendication 9, dans lequel le refroidissement est effectué en plusieurs étapes, en ce que le deuxième courant de processus (24), qui est évacué de la colonne de désorption, est refroidi dans un échangeur de chaleur avec de l'eau de refroidissement essentiellement à la température de l'eau de refroidissement, et est ensuite porté dans au moins un échangeur de chaleur (22), qui fonctionne avec de l'eau froide provenant d'une installation frigorifique à absorption, à une température située dans la plage supérieure à 10°C et inférieure à la température de l'eau de refroidissement.

11. Procédé selon au moins une des revendications 1 à 10, dans lequel le processus technologique est un processus de fabrication d'oxyde d'éthylène et/ou d'éthylène glycol.

12. Procédé selon la revendication 10, dans lequel le processus technologique est un processus de fabrication d'oxyde d'éthylène et dans la colonne de désorption un liquide de lavage chargé en oxyde d'éthylène est régénéré, dans lequel on soutire le premier courant de processus (14) enrichi en oxyde d'éthylène à la tête de la colonne, le liquide de lavage régénéré en tant que deuxième courant de processus (24) est refroidi en plusieurs étapes et est renvoyé à la colonne d'absorption, dans lequel le refroidissement est effectué à une température située dans la plage de 15°C à 30°C, de préférence dans la plage de 18°C à 22°C.

13. Procédé selon la revendication 12, dans lequel un milieu chauffant sous forme de vapeur (18) est injecté dans le circuit de milieu caloporteur (10) et une régulation assistée par un modèle minimise la somme du milieu chauffant ajouté (18) et de l'apport de vapeur à l'évaporateur de la colonne de désorption en influençant la quantité du milieu chauffant sous forme de vapeur (18).
